# EUROPEAN PATENT SPECIFICATION

(11) **EP 3 964 805 B1**
(45) Date of publication and mention of the grant of the patent: **14.06.2023**
(21) Application number: 21191695.2
(22) Date of filing: 17.08.2021
(51) Int. Cl.: G01G 19/393

(54) **COMBINATION WEIGHING DEVICE**
KOMBINATIONSWÄGEVORRICHTUNG
DISPOSITIF DE PESAGE PAR COMBINAISON

(30) Priority: 04.09.2020 JP 2020149211
(43) Date of publication of application: 09.03.2022
(73) Proprietor: Ishida Co., Ltd., Kyoto-shi, Kyoto 606-8392 (JP)
(72) Inventor: NISHIMURA, Ryoji, Ritto-shi, Shiga 520-3026 (JP); KONISHI, Hiroe, Ritto-shi, Shiga 520-3026 (JP)
(74) Representative: Gill Jennings & Every LLP

(56) References cited:
- EP-A1- 3 346 242
- JP-A- 2016 061 716

## Description

### Technical Field

The present invention relates to a combination weighing device.

### Background Art

Generally speaking, a combination weighing device has a plurality of hoppers and is configured to perform a combination calculation on the basis of the weight values of articles in each hopper, select a combination of hoppers for which the total weight value falls within a correct weight range (target range) that is greater than or equal to a target value and less than or equal to an upper limit value, and discharge the articles from the selected hoppers.

For example, when the number of hoppers is 10, there are 1,023 combinations of hoppers, and a breakdown reveals that the most common case is to select 5 hoppers from among 10 hoppers. Therefore, articles are supplied to each hopper so that the distribution of weight values retained in each hopper has some degree of variation, with the peak in the vicinity of 1/5 of the target value.

Here, the combination weighing device is configured to supply additional articles while the articles are left as is in each hopper if no combination of hoppers can be found for which the total weight value of the articles in each hopper falls within the correct weight range. Therefore, in the foregoing distribution, the second peak is in the vicinity of 2/5 of the target value.

However, in a combination weighing device which is used to produce products such as mixed nuts, in which a plurality of types of articles (weighed items) are mixed in small quantities, the capacity of each hopper is small and the number of hoppers is often also small due to production space issues.

In such a combination weighing device, the number of hoppers used to weigh one type of article is from two to four, and therefore additional hoppers are provided below the hopper with the weighing sensor (the weighing hopper).

In this case, when the number of weighing hoppers is two, the number of hoppers used for the combination calculation is four, and the number of hopper combinations is 15, but a breakdown reveals that the most common case is to select two hoppers from among four hoppers. Therefore, articles are supplied to each hopper so that the distribution of weight values retained in each hopper has some degree of variation, with the peak in the vicinity of 1/2 of the target value.

At such time, if no combination of hoppers can be found in which the total weight value of the articles in each hopper falls within the correct weight range, and if additional articles are supplied while articles are left as is in each hopper, a second peak will be in the vicinity of the target value in the foregoing distribution, and a case (over-scaling) may occur in which the weight value of the articles in one hopper exceeds the correct weight range.

In addition, even when the number of weighing hoppers is large, for example, when the correct weight range for an article with a single weight value of 1.5 g is 3 to 4 g, a case (over-scaling) may occur in which the weight value of the articles in one hopper exceeds the correct weight range.

In order to avoid a drop in the utilization rate due to the occurrence of such over-scaling, a combination weighing device is known that is provided with a mechanism for discharging articles in a hopper in which over-scaling has occurred from the system (outside) instead of discharging same to a post-process device such as a packaging machine (for example, refer to Patent Literature 1).

Patent Literature 2 discloses a combination weighing device that has a dispersion feeder which disperses articles, a plurality of troughs provided downstream therefrom, a plurality of hoppers provided downstream from the respective troughs and a gathering chute provided downstream from the plurality of hoppers. Some of the hoppers are hoppers for weighing articles. The combination weighing device selects a combination based upon a measured value of a weighing hopper performs a combination weighing operation for discharging a selected article to the gathering chute and further has a normal path where an article is conveyed during the combination weighing operation, a defective reception box provided outside the normal path and a second gate distributing an article that a hopper reserves to the defective reception box.

### Citation List

### Patent Literature

Patent Literature 1: JP 2005-017201 A
Patent Literature 2: JP 2016-061716 A

### Summary of Invention

### Technical Problem

However, in a combination weighing device provided with a mechanism for discharging articles in a hopper in which over-scaling has occurred from the system (outside), a combinations are calculated using hoppers in which over-scaling has not occurred so as to avoid a drop in the utilization rate. However, when a combination of hoppers in which the total weight value of the articles in each hopper is within the correct weight range is not found as a result of the combination calculation, and if additional articles are supplied while articles are left as is in each hopper, over-scaling sometimes occurs. In such cases, even if the articles for which over-scaling has occurred are discharged from the system, the number of hoppers that can be used in the combination calculation is reduced, and again, a combination of hoppers for which the total weight value of the articles in each hopper falls within the correct weight range cannot be found, resulting in a drop in the utilization rate.

Therefore, the present invention was conceived in view of the foregoing problems, and it is an object of the present invention to provide a combination weighing device that is capable of reducing a drop in the utilization rate by avoiding the frequent occurrence of over-scaling. Solution to Problem

The invention is a combination weighing device according to claim 1 and is summarized as including: a conveyance unit configured to convey articles, which are being fed, downstream; a plurality of hoppers (5, 6) configured to temporarily retain the articles which are conveyed by the conveyance unit, and then discharge the articles downstream; an acquisition unit (50) configured to acquire weight values of the articles retained in each of the hoppers; and a control unit (30) configured to specify at least one of the hoppers from which the articles are discharged on the basis of the weight values and a target range which is preset, wherein when a combination of the weight values that falls within the target range is not obtained, the control unit (30) selectively switches the operation of the combination weighing device (1) between a first mode and a second mode, in the first mode, the combination weighing device operates such that the articles are additionally supplied to a selected hopper while the articles retained in the hopper are left as is, and in the second mode, the combination weighing device operates such that, for a selected hopper for which over-scaling may occur when additional articles are supplied thereto, instead of the articles being additionally supplied to a selected hopper, the articles retained in the selected hopper are discharged to the outside, and the articles are newly supplied to the selected hopper.

### Advantageous Effects of Invention

According to the present invention, it is possible to provide a combination weighing device that is capable of reducing a drop in the utilization rate by avoiding the frequent occurrence of over-scaling.

### Brief Description of Drawings

Fig. 1 is a diagram schematically illustrating a combination weighing device according to an embodiment.
Fig. 2 is a diagram serving to illustrate an example of the flow of articles in the combination weighing device according to the embodiment.
Fig. 3 is a diagram serving to illustrate an example of the operation of the combination weighing device according to the embodiment.
Fig. 4 is a flowchart illustrating an example of the operation of the combination weighing device according to the embodiment.

### Description of Embodiments

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First embodiment)

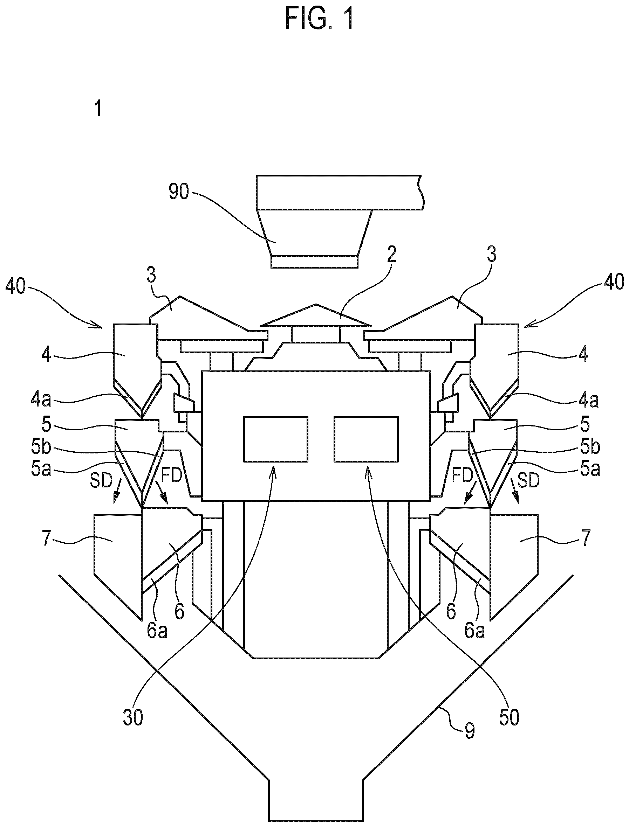

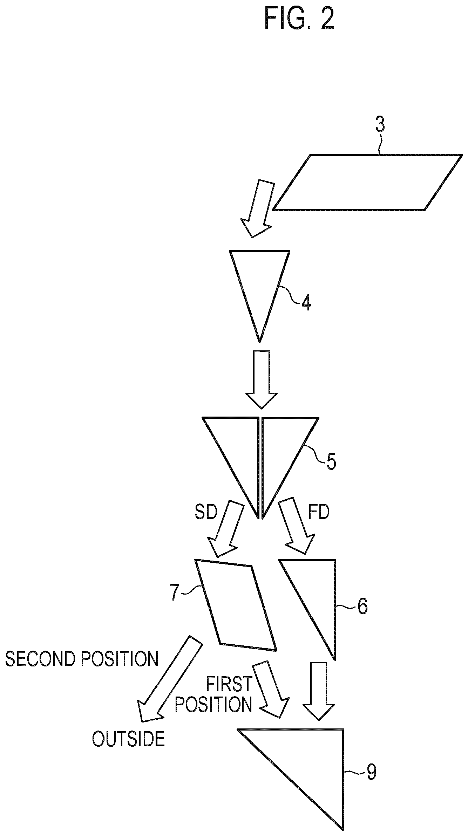

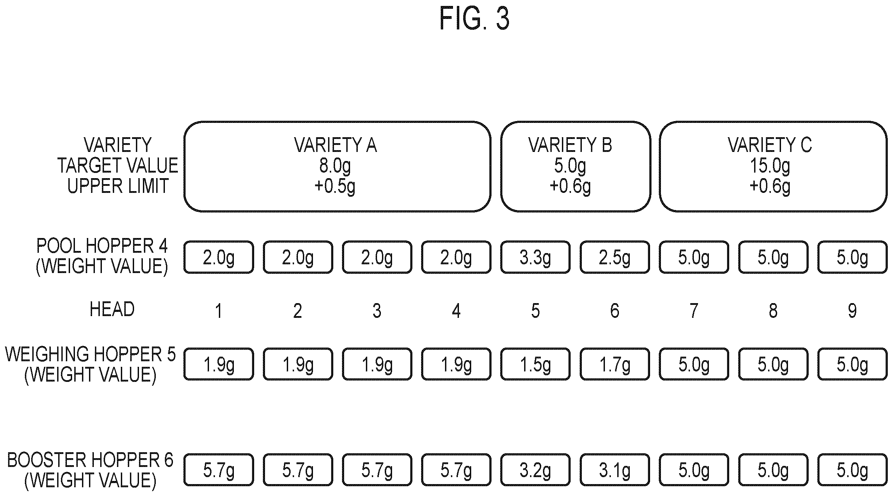

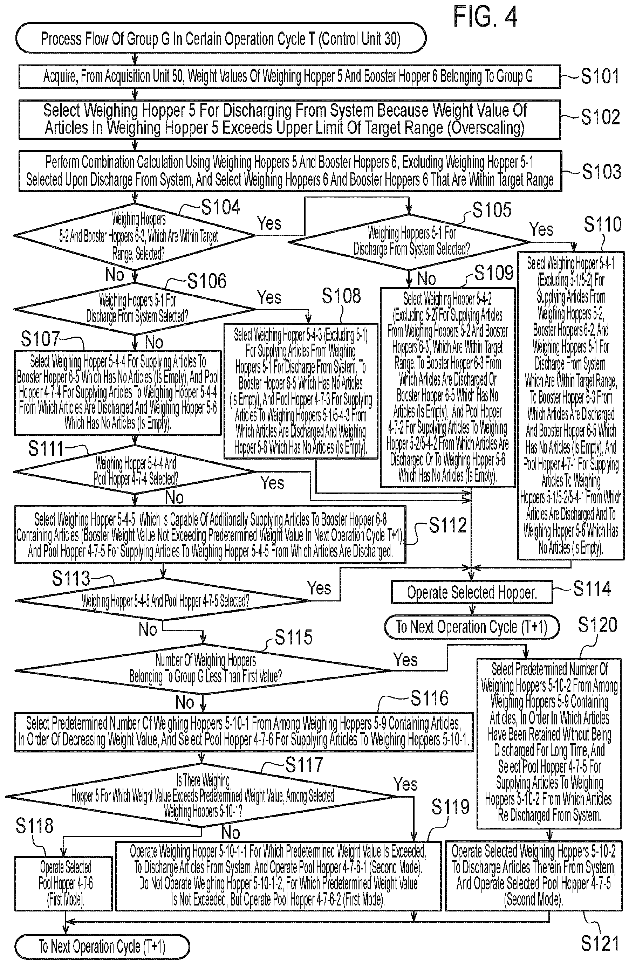

A combination weighing device 1 according to a first embodiment of the present invention will be described hereinbelow with reference to Figs. 1 to 4. Fig. 1 is a diagram schematically illustrating the combination weighing device 1 according to this embodiment; Fig. 2 is a diagram serving to illustrate an example of the flow of articles in the combination weighing device 1 according this embodiment; Fig. 3 is a diagram serving to illustrate an example of the operation of the combination weighing device 1 according to this embodiment; and Fig. 4 is a flowchart illustrating an example of the operation of the combination weighing device 1 according to this embodiment.

As illustrated in Fig. 1, the combination weighing device 1 according to this embodiment comprises a dispersion feeder 2, n heads 40, a discharge chute 9, an acquisition unit 50, and a control unit 30. n may be a natural number greater than or equal to 1, or may be a natural number greater than or equal to 2. n is 14, for example.

The heads 40 are arranged in an annular shape in a top view. The heads 40 are configured from a first head 40-1 to an nth head 40-n. The first head 40-1 to the nth head 40-n are arranged in numerical order counterclockwise in a top view. Here, "annular shape" includes circular and polygonal rings, or the like. In this embodiment, heads 40 which are arranged in a circular ring will be described by way of an example.

The heads 40 are each provided with a radiant feeder 3, a pool hopper 4, a weighing hopper 5, a booster hopper 6, and a sorting chute 7. Therefore, the radiant feeder 3, the pool hopper 4, the weighing hopper 5, the booster hopper 6, and the sorting chute 7 are also arranged in a ring shape, respectively, in a top view.

The dispersion feeder 2 is a flat, conical member. Articles are supplied to the dispersion feeder 2 by the supply conveyor 90 provided above the dispersion feeder 2. The top surface of the dispersion feeder 2 vibrates due to an electromagnet, which is not illustrated in the drawing, provided at the bottom of the dispersion feeder 2. The dispersion feeder 2 disperses the articles supplied to the top surface in the circumferential direction while conveying the articles in a radial direction, and supplies the articles to each radiant feeder 3.

Each radiant feeder 3 is a sheet-metal member molded by bending respective stainless steel plates. Each radiant feeder 3 is arranged radially along the perimeter of the dispersion feeder 2.

Each radiant feeder 3 is configured such that the conveyance surface thereof is made to vibrate by an electromagnet, not illustrated, provided at the bottom of the radiant feeder 3. Each radiant feeder 3 is configured to convey articles outward through the vibration of the conveyance surface.

Furthermore, as illustrated in Fig. 2, each radiant feeder 3 is configured to supply articles to the pool hopper 4 of the head 40 to which that radiant feeder 3 belongs.

The conveyance performance of the radiant feeder 3 can be adjusted by the vibration intensity (vibration amplitude) and vibration time at the conveyance surface. Therefore, by adjusting the vibration intensity and vibration time, the weight values of the articles supplied to each pool hopper 4 can be kept within a predetermined range.

Each pool hopper 4 is disposed below the tip of the corresponding radiant feeder 3. Each pool hopper 4 is configured to temporarily hold or discharge articles supplied from the radiant feeder 3.

The pool hopper 4 is provided with a gate 4a that opens and closes the bottom of the pool hopper 4, and a stepping motor (not illustrated) that drives the gate 4a.

The gate 4a is configured to perform open and close operations as a result of the control unit 30 controlling the stepping motor. The pool hopper 4 is configured to hold the articles inside the pool hopper 4 when the gate 4a is in a closed state, and to discharge, when the gate 4a is in an open state, the articles into the weighing hopper 5 of the head 40 to which the pool hopper 4 belongs, as illustrated in Fig. 2.

The weighing hopper 5 is configured to temporarily receive articles for weighing and to distribute and discharge the weighed articles in either a first direction FD or a second direction SD.

Each weighing hopper 5 is disposed directly under the pool hopper 4 of the head 40 to which the weighing hopper 5 belongs. The weighing hopper 5 is configured to hold the articles supplied from the pool hopper 4 and weigh the weight values of these articles.

The weighing hopper 5 is provided with gates 5a and 5b that open and close the bottom of the weighing hopper 5, and a stepping motor (not illustrated) for driving the gates 5a and 5b.

The weighing hopper 5 is configured to hold articles therein when the gates 5a and 5b are both in a closed state. In this state, the weighing hopper 5 is in a state of temporarily receiving the articles.

The weighing hopper 5 is configured to open one of the gates 5a and 5b to sort and discharge the weighed articles in either the first direction FD or the second direction SD.

When the gate 5b is in an open state, the weighing hopper 5 is configured to sort and discharge the articles in the first direction FD and to discharge the articles into the booster hopper 6 of the head 40 to which the weighing hopper 5 belongs, as illustrated in Fig. 2.

On the other hand, when the gate 5a is in an open state, the weighing hopper 5 is configured to sort and discharge the articles in the second direction SD and to discharge the articles into the sorting chute 7 of the head 40 to which the weighing hopper 5 belongs, as illustrated in Fig. 2.

The booster hopper 6 is configured to temporarily receive articles discharged in the first direction FD and to discharge the received articles downstream. Each booster hopper 6 is disposed below the weighing hopper 5 of the head 40 to which the booster hopper 6 belongs, close to the center of the combination weighing device 1.

The booster hopper 6 is configured to temporarily hold or discharge the articles supplied from the weighing hopper 5.

The booster hopper 6 has a gate 6a that can be opened and closed. More specifically, the booster hopper 6 is provided with a gate 6a that opens and closes the bottom of the booster hopper 6.

The booster hopper 6 is configured to hold articles therein when the gate 6a is in a closed state. This is a state in which the booster hopper 6 is temporarily receiving the articles.

On the other hand, the booster hopper 6 is configured to discharge articles into the discharge chute 9 when the gate 6a is in an open state, as illustrated in Fig. 2.

Note that the booster hopper 6 may also be provided with a weighing sensor and configured to be capable of weighing the weight values of the articles retained in the booster hopper 6.

The sorting chute 7 is configured to discharge the articles discharged in the second direction SD downstream. Each sorting chute 7 is disposed below the weighing hopper 5 of the head 40 to which the sorting chute 7 belongs, toward the outside of the combination weighing device 1.

The position of the sorting chute 7 is switched by the drive unit. As illustrated in Fig. 2, the sorting chute 7 is configured such that, in the first position, the articles discharged in the second direction SD are discharged into the discharge chute 9, and is configured such that, in the second position, the articles discharged in the second direction SD are discharged to outside the discharge chute 9 (from the system).

In the discharge chute 9, the articles discharged from the booster hopper 6 and the sorting chute 7 slide down. In other words, the discharge chute 9 is configured to discharge such articles downstream.

The discharge chute 9 is configured such that the articles discharged from the weighing hopper 5 and the booster hopper 6, which have been selected by the combination calculation, are gathered in one place and discharged downward. The articles discharged from the discharge chute 9 are supplied to a downstream packaging device or the like.

Therefore, each radiant feeder 3 functions as a conveyance unit that conveys the fed articles downstream.

Furthermore, each weighing hopper 5 and each booster hopper 6 functions as a plurality of hoppers that temporarily retain the articles conveyed by the radiant feeder 3 and then discharge the articles downstream.

The acquisition unit 50 is configured to acquire the weight values of the articles that are retained in each of the plurality of hoppers (that is, each weighing hopper 5 and each booster hopper 6).

More specifically, the acquisition unit 50 may also be configured to acquire the weight value weighed by the weighing sensor of the weighing hopper 5 as the weight value of the articles retained in the weighing hopper 5.

Additionally, when the booster hopper 6 is provided with a weighing sensor, the acquisition unit 50 may be configured to acquire the weight value weighed by the weighing sensor. When the booster hopper 6 is not provided with a weighing sensor, the acquisition unit 50 may be configured to acquire, as the weight value of the articles retained in the booster hopper 6, the weight value of the articles retained in the weighing hopper 5 that was acquired immediately before the weighing hopper 5 opened the gate 5b to sort and discharge the articles in the first direction FD.

The operation of the foregoing control unit 30 will be described hereinbelow using Fig. 3.

In the example in Fig. 3, the target value for a variety A is 8.0g, the upper limit for variety A is 0.5g, the target range (target value to target value + upper limit) for variety A is 8.0g to 8.5g, and the number of heads 40 for variety A is 4, namely 40-1 to 40-4.

Similarly, the target value for a variety B is 5.0g, the upper limit for variety B is 0.6g, the target range for variety B is 5.0g to 5.6g, and the number of heads 40 for variety B is 2, namely 40-5 to 40-6.

Similarly, the target value for a variety C is 15.0 g, the upper limit for variety C is 0.6 g, the target range for variety C is 15.0 g to 15.6 g, and the number of heads 40 for variety C is 3, namely 40-7 to 40-9.

The control unit 30 is configured to specify at least one hopper (the weighing hopper 5 and/or the booster hopper 6) for discharging the articles to the discharge chute 9 on the basis of the weight value acquired by the acquisition unit 50 and the preset target range.

In the example of Fig. 3, the control unit 30 determines that, for variety A, it is not possible to obtain a combination of weight values (the weight values of the weighing hopper 5 and the booster hopper 6) that falls within the target range (8.0g to 8.5g).

Similarly, the control unit 30 determines that, for variety B, it is not possible to obtain a combination of weight values (the weight values of the weighing hopper 5 and the booster hopper 6) that falls within the target range (5.0g to 5.6g).

On the other hand, the control unit 30 determines that, for variety C, it is possible to obtain a combination of weight values (the weight values of the weighing hopper 5 and the booster hopper 6) that falls within the target range (15.0 g to 15.6 g), and is capable of specifying the booster hoppers 6 which belong to the headers 40-7 to 40-9 as at least one hopper for discharging articles to the discharge chute 9, for example.

Here, when a combination of weight values that falls within the target range cannot be obtained, the control unit 30 is configured to selectively switch the operation of the combination weighing device 1 between a first mode and a second mode.

In the first mode, the combination weighing device 1 operates to supply additional articles to the selected hopper while the articles retained in each hopper are left as is. For example, in the first mode, the combination weighing device 1 selects a hopper for which the weight value of the articles retained in the hopper is light and with which no over-scaling occurs even when additional articles are added.

On the other hand, in the second mode, the combination weighing device 1 operates such that additional articles are not supplied to the selected hopper, rather, the articles retained in the hopper are discharged to the outside and articles are once again supplied to the hopper. For example, in the second mode, the combination weighing device 1 selects a hopper for which the weight value of the articles retained in the hopper is heavy and with which over-scaling readily occurs when additional articles are supplied thereto. In comparative examples, in the second mode, the combination weighing device 1 may select a hopper in which the articles have not been selected in a combination for a long time and are retained in the hopper.

In the example in Fig. 3 (a certain operation cycle T), there are no combinations of weight values for varieties A and B that fall within the target range.

Therefore, in the certain operation cycle T, the combination weighing device 1 supplies the articles in the weighing hopper 5 to the booster hopper 6, or supplies the articles in the pool hopper 4 to the weighing hopper 5, or supplies the articles in the weighing hopper 5 to the booster hopper 6 and supplies the articles in the pool hopper 4 to the weighing hopper 5.

When the combination weighing device 1 supplies the articles in the weighing hopper 5 to the booster hopper 6 in the certain operation cycle T, and if the booster hopper 6 is no longer selected as the hopper for discharging the foregoing articles in the next operation cycle T+1, then in the certain operation cycle T, the combination weighing device 1 supplies the articles in the pool hopper 4 to the weighing hopper 5 (first mode).

However, for variety B, upon supplying the articles in the pool hopper 4 to the weighing hopper 5 in the certain operation cycle T (first mode), the combination weighing device 1 determines that the weight value of the articles in the weighing hopper 5 is more likely to be out of the target range in the next operation cycle T+1, and in the certain operation cycle T, the device 1 supplies the articles in the pool hopper 4 to the weighing hopper 5 after discharging the articles in the weighing hopper 5 to outside (from the system) (second mode).

When the weight value acquired by the acquisition unit 50 exceeds a predetermined value which is preset (for example, the supply mode determination weight value), the control unit 30 may also be configured to cause the articles retained in the hopper which correspond to the weight value to be discharged to the outside.

Here, in the second mode, the control unit 30 may also be configured to cause the articles retained in the hopper which correspond to the weight value to be discharged to the outside, even when the weight value acquired by the acquisition unit 50 does not exceed the predetermined value.

According to such a configuration, when articles are supplied in the certain operation cycle T, the articles which are retained in a hopper with a weight value that is likely to be out of the target range in the next operation cycle T+1 are discharged to the outside in the certain operation cycle T, thereby increasing the likelihood of this hopper being selected as the hopper for discharging the foregoing articles in the next operation cycle T+1.

Furthermore, the control unit 30 may also be configured to switch the operation of the combination weighing device 1 from the first mode to the second mode, when the combination weighing device 1 is operating in the first mode and when the weight value acquired by the acquisition unit 50 exceeds the predetermined value.

According to such a configuration, when the weight value acquired by the acquisition unit 50 exceeds the predetermined value, the combination weighing device 1 can, by switching to the second mode, discharge, to the outside, the articles retained in the hopper which correspond to this weight value and then supply the articles to this hopper, thereby increasing the likelihood of this hopper being selected as the hopper for discharging the foregoing articles.

In addition, the control unit 30 may be configured to switch the operation of the combination weighing device 1 to the first mode, when the number of hoppers is greater than or equal to a first value. The control unit 30 may be configured to switch the operation of the combination weighing device 1 to the second mode, when the number of hoppers is less than the first value.

When the number of hoppers is small, if over-scaling occurs due to the supply of articles, the number of hoppers that can be selected in the combination calculation will be reduced, and the likelihood of no longer being able to obtain a combination of weight values that fall within the target range will increase. Therefore, by switching the operation of the combination weighing device 1 to the second mode as per the foregoing configuration, the likelihood of each hopper being selected as the hopper for discharging the foregoing articles is increased.

Further, the control unit 30 may be configured to divide the hoppers into a plurality of groups. When the number of hoppers belonging to the groups is greater than or equal to the first value, the control unit 30 may be configured to switch the operation of the combination weighing device 1 for this group to the first mode. When the number of hoppers belonging to the group is less than the first value, the control unit 30 may be configured to switch the operation of the combination weighing device 1 to the second mode. Here, each hopper may be divided into groups for different varieties.

In the example of Fig. 3, if the first value is 4, the number of hoppers belonging to the group corresponding to variety A is 4, and the number of hoppers belonging to the group corresponding to variety B is 2, and therefore the control unit 30 may be configured to switch the operation of the combination weighing device 1 for the group corresponding to variety A to the first mode, and to switch the operation of the combination weighing device 1 for variety B to the second mode.

According to this configuration, the utilization rate can be improved by avoiding frequent over-scaling even in combination weighing devices used to produce products such as mixed nuts, in which a plurality of types of articles are mixed in small quantities.

The operation of the combination weighing device 1 according to this embodiment is described hereinbelow with reference to Fig. 4. More specifically, the operation of the control unit 30 of the combination weighing device 1 according to this embodiment with respect to a group G at a certain operation timing T will be described.

As illustrated in Fig. 4, in step S101, the control unit 30 acquires, from the acquisition unit 50, the weight values of the articles in the weighing hopper 5 and of the articles in the booster hopper 6 which belong to group G.

In step S102, because the weight value of the articles in the weighing hopper 5 exceeds the upper limit of the target range (over-scaling), the control unit 30 selects a weighing hopper 5-1 for discharging the articles from the system.

Here, the control unit 30 may select, as the weighing hopper 5 for discharge from the system, a weighing hopper 5 for which the weight value of the articles is not within the proper weight range (standard product) or for which the weight value of the articles is within an inappropriate weight range (not selected in a combination calculation).

In step S103, the control unit 30 performs a combination calculation using the remaining weighing hoppers 5 and booster hoppers 6, excluding the weighing hopper 5-1 which has been selected to discharge the articles from the system, and selects the weighing hoppers 5 and booster hoppers 6 that are within the target range.

In step S104, the control unit 30 determines whether or not it has been possible in step S103 to select the weighing hoppers 5-2 and the booster hoppers 6-3, which are within the target range. If Yes (that is, if it has been possible to select candidates for the weighing hoppers 5 and the booster hoppers 6 for discharging the articles to the discharge chute 9), this process flow advances to step S105, and if No, this process flow advances to step S106.

In step S105, the control unit 30 determines whether or not it was possible in step 102 to select the weighing hopper 5-1 to discharge the articles from the system. If Yes, this process flow advances to step S110, and if No, this process flow advances to step S109.

In step S106, the control unit 30 determines whether or not it was possible in step 102 to select the weighing hopper 5-1 to discharge the articles from the system. If Yes, this process flow advances to step S108, and if No, this process flow advances to step S107.

In step S107, the control unit 30 selects a weighing hopper 5-4-4 for supplying articles to the booster hopper 6-5 which has no articles (is empty), and a pool hopper 4-7-4 for supplying articles to the weighing hopper 5-4-4 from which articles are discharged and a weighing hopper 5-6 which has no articles (is empty).

In step S108, the control unit 30 selects a weighing hopper 5-4-3 (excluding the weighing hoppers 5-1) for supplying the articles from the weighing hoppers 5-1 selected for discharge from the system, to a booster hopper 6-5 which has no articles (is empty), and a pool hopper 4-7-3 for supplying articles to the weighing hoppers 5-1/5-4-3 from which articles are discharged and the weighing hopper 5-6 which has no articles (is empty).

In step S109, the control unit 30 selects a weighing hopper 5-4-2 (excluding the weighing hopper 5-2) for supplying articles from the weighing hoppers 5-2 and booster hoppers 6-3, which are within the target range, to the booster hopper 6-3 from which articles are discharged or the booster hopper 6-5 which has no articles (is empty), and a pool hopper 4-7-2 for supplying articles to the weighing hopper 5-2/5-4-2 from which articles are discharged or to the weighing hopper 5-6 which has no articles (is empty).

In step S110, the control unit 30 selects a weighing hopper 5-4-1 (excluding the weighing hoppers 5-1/5-2) for supplying articles from the weighing hoppers 5-2, the booster hoppers 6-3, and the weighing hoppers 5-1 for discharge from the system, which are within the target range, to the booster hopper 6-3 from which articles are discharged and the booster hopper 6-5 which has no articles (is empty), and a pool hopper 4-7-1 for supplying articles to the weighing hoppers 5-1/5-2/5-4-1 from which articles are discharged and to the weighing hopper 5-6 which has no articles (is empty).

In step Sill, the control unit 30 determines whether or not it was possible in step 107 to select the weighing hopper 5-4-4 and the booster hopper 6-7-4. If Yes, this process flow advances to step S114, and if No, this process flow advances to step S112.

In step S112, the control unit 30 selects the weighing hopper 5-4-5, which is capable of additionally supplying articles to the booster hopper 6-8 containing articles (that is, the booster hopper 6-8 which has a weight value not exceeding the predetermined weight value in the next operation cycle T+1), and a pool hopper 4-7-5 for supplying articles to the weighing hopper 5-4-5 from which the articles are discharged.

In step S113, the control unit 30 determines whether or not it was possible in step 112 to select the weighing hopper 5-4-5 and the booster hopper 6-7-5. If Yes, this process flow advances to step S114, and if No (that is, if the supply operation of the first mode or second mode is required), this process flow advances to step S115.

In step S114, the control unit 30 operates the selected hopper, and this process flow advances to the next operation cycle T+1. Note that, for the hopper selected in step S109/S110, the control unit 30 sometimes changes the hopper to be operated depending on the processing results of other groups other than group G.

In step S115, the control unit 30 determines whether or not the number of weighing hoppers 5 belonging to group G is less than the first value. If Yes, this process flow advances to step S120, and if No, this process flow advances to step S116.

In step S116, the control unit 30 selects a predetermined number of weighing hoppers 5-10-1 from among the weighing hoppers 5-9 containing articles, in order of decreasing weight value of the articles, and selects a pool hopper 4-7-6 for supplying articles to these weighing hoppers 5-10-1.

In step S117, the control unit 30 determines whether or not there is a weighing hopper 5 for which the weight value of the articles exceeds the predetermined weight value, among the weighing hoppers 5-10-1 selected in step S116. If Yes, this process flow advances to step S119, and if No, this process flow advances to step S118.

In step S118, the control unit 30 operates the pool hopper 4-7-6 selected in step S116 (first mode).

In step S119, the control unit 30 operates a weighing hopper 5-10-1-1, for which the weight value of the articles exceeds the predetermined weight value, to discharge the articles from the system, and operates a pool hopper 4-7-6-1 for supplying the articles to the weighing hopper 5-10-1-1 (second mode). Moreover, the control unit 30 does not operate a weighing hopper 5-10-1-2, for which the weight value of the articles does not exceed the predetermined weight value, but operates the pool hopper 4-7-6-2 for supplying the articles to the weighing hopper 5-10-1-2 (first mode).

In step S120, the control unit 30 selects a predetermined number of weighing hoppers 5-10-2 from among the weighing hoppers 5-9 containing articles, in the order in which the articles have been retained without being discharged for a long time, and selects a pool hopper 4-7-5 for supplying the articles to the weighing hoppers 5-10-2 from which the articles are discharged from the system.

In step S121, the control unit 30 operates the weighing hoppers 5-10-2 selected in step S120 to discharge the articles therein from the system, and operates the pool hopper 4-7-5 selected in step S120 (second mode).

According to this embodiment, the frequent occurrence of over-scaling can be avoided in the combination weighing device 1, thereby reducing a drop in the utilization rate.

### Reference Signs List

- 1: Combination weighing device
- 2: Dispersion feeder
- 3: Radiant feeder
- 4: Pool hopper
- 4a: Gate
- 5: Weighing hopper
- 5a, 5b: Gate
- 6: Booster hopper
- 6a: Gate
- 7: Sorting chute
- 9: Discharge chute
- 30: Control unit
- 40: Head
- 50: Acquisition unit
- 90: Supply conveyor

## Claims

1. A combination weighing device (1), comprising:
a conveyance unit configured to convey articles, which are being fed, downstream;
a plurality of hoppers (5, 6) configured to temporarily retain the articles which are conveyed by the conveyance unit, and then discharge the articles downstream;
an acquisition unit (50) configured to acquire weight values of the articles retained in each of the hoppers; and
a control unit (30) configured to specify at least one of the hoppers from which the articles are discharged on the basis of the weight values and a target range which is preset, **characterised in that**
when a combination of the weight values that falls within the target range is not obtained, the control unit (30) selectively switches the operation of the combination weighing device (1) between a first mode and a second mode,
in the first mode, the combination weighing device operates such that the articles are additionally supplied to a selected hopper while the articles retained in the hopper are left as is, and
in the second mode, the combination weighing device operates such that, for a selected hopper for which over-scaling may occur when additional articles are supplied thereto, instead of the articles being additionally supplied to the selected hopper, the articles retained in the selected hopper are discharged to the outside, and the articles are newly supplied to the selected hopper.

2. The combination weighing device (1) according to claim 1, wherein
when the weight value exceeds a predetermined value which is preset, the control unit (30) causes the articles retained in the hopper which correspond to the weight value to be discharged to the outside, and
in the second mode, the control unit (30) causes the articles retained in the hopper which correspond to the weight value to be discharged to the outside even when the weight value does not exceed the predetermined value.

3. The combination weighing device (1) according to claim 2, wherein
the control unit (30) switches the operation of the combination weighing device (1) from the first mode to the second mode, when the combination weighing device (1) is operating in the first mode and when the weight value exceeds the predetermined value.

4. The combination weighing device (1) according to any one of claims 1 to 3, wherein
the control unit (30) switches the operation of the combination weighing device (1) to the first mode, when the number of the hoppers is greater than or equal to a first value, and
the control unit (30) switches the operation of the combination weighing device (1) to the second mode, when the number of the hoppers is less than the first value.

5. The combination weighing device (1) according to claim 4, wherein
the control unit (30) divides the hoppers into a plurality of groups,
when the number of the hoppers belonging to the groups is greater than or equal to the first value, the control unit (30) switches the operation of the combination weighing device (1) with respect to the groups to the first mode, and
when the number of the hoppers belonging to the group is less than the first value, the control unit (30) switches the operation of the combination weighing device (1) with respect to the groups to the second mode.

## Patentansprüche

1. Kombinationswägevorrichtung (1), die aufweist:
eine Fördereinheit, die konfiguriert ist, Artikel, die zugeführt werden, stromabwärts zu fördern;
mehrere Trichter (5, 6), die konfiguriert sind, die Artikel, die von der Fördereinheit gefördert werden, vorübergehend zurückzuhalten und die Artikel dann stromabwärts abzugeben
eine Erfassungseinheit (50), die konfiguriert ist, Gewichtswerte der in jedem der Trichter zurückgehaltenen Artikel zu erfassen; und
eine Steuereinheit (30), die konfiguriert ist, mindestens einen der Trichter, aus dem die Artikel abgegeben werden, auf der Grundlage der Gewichtswerte und eines Zielbereichs, der voreingestellt ist, zu spezifizieren, **dadurch gekennzeichnet, dass**
wenn eine Kombination der Gewichtswerte, die in den Zielbereich fällt, nicht erhalten wird, die Steuereinheit (30) den Betrieb der Kombinationswägevorrichtung (1) selektiv zwischen einem ersten Modus und einem zweiten Modus umschaltet, wobei im ersten Modus die Kombinationswägevorrichtung so arbeitet, dass die Artikel zusätzlich einem ausgewählten Trichter zugeführt werden, während die in dem Trichter zurückgehaltenen Artikel unverändert belassen werden, und
im zweiten Modus die Kombinationswägevorrichtung so arbeitet, dass für einen ausgewählten Trichter, bei dem es zu einer Überwiegung kommen kann, wenn ihm zusätzliche Artikel zugeführt werden, anstatt dass die Artikel dem ausgewählten Trichter zusätzlich zugeführt werden, die im ausgewählten Trichter zurückgehaltenen Artikel nach außen abgegeben werden und die Artikel dem ausgewählten Trichter neu zugeführt werden.

2. Kombinationswägevorrichtung (1) nach Anspruch 1, wobei wenn der Gewichtswert einen vorgegebenen Wert überschreitet, der voreingestellt ist, die Steuereinheit (30) bewirkt, dass die im Trichter zurückgehaltenen Artikel, die dem Gewichtswert entsprechen, nach außen abgegeben werden, und
im zweiten Modus die Steuereinheit (30) bewirkt, dass die im Trichter zurückgehaltenen Artikel, die dem Gewichtswert entsprechen, nach außen abgegeben werden, selbst wenn der Gewichtswert den vorgegebenen Wert nicht überschreitet.

3. Kombinationswägevorrichtung (1) nach Anspruch 2, wobei die Steuereinheit (30) den Betrieb der Kombinationswägevorrichtung (1) vom ersten Modus in den zweiten Modus umschaltet, wenn die Kombinationswägevorrichtung (1) im ersten Modus betrieben wird und der Gewichtswert den vorgegebenen Wert überschreitet.

4. Kombinationswägevorrichtung (1) nach einem der Ansprüche 1 bis 3, wobei
die Steuereinheit (30) den Betrieb der Kombinationswägevorrichtung (1) in den ersten Modus schaltet, wenn die Anzahl der Trichter größer oder gleich einem ersten Wert ist, und
die Steuereinheit (30) den Betrieb der Kombinationswägevorrichtung (1) in den zweiten Modus schaltet, wenn die Anzahl der Trichter kleiner als der erste Wert ist.

5. Kombinationswägevorrichtung (1) nach Anspruch 4, wobei die Steuereinheit (30) die Trichter in mehrere Gruppen unterteilt,
wenn die Anzahl der zu den Gruppen gehörenden Trichter größer oder gleich dem ersten Wert ist, die Steuereinheit (30) den Betrieb der Kombinationswägevorrichtung (1) in Bezug auf die Gruppen in den ersten Modus schaltet, und wenn die Anzahl der zu der Gruppe gehörenden Trichter kleiner als der erste Wert ist, die Steuereinheit (30) den Betrieb der Kombinationswägevorrichtung (1) in Bezug auf die Gruppen in den zweiten Modus schaltet.

## Revendications

1. Dispositif de pesage par combinaison (1), comprenant :
une unité d'acheminement configurée pour acheminer en aval des articles qui sont introduits ;
une pluralité de trémies (5, 6) configurées pour maintenir provisoirement les articles acheminés par l'unité d'acheminement, pour décharger ensuite les articles en aval ;
un module de saisie (50) configuré pour saisir des valeurs de poids des articles maintenus dans chacune des trémies ; et
un dispositif de commande (30) configuré pour spécifier au moins une des trémies d'où les articles sont déchargés en fonction des valeurs de poids et d'une plage cible préétablie, **caractérisé en ce que**
lorsque l'on n'obtient pas une combinaison des valeurs de poids comprise dans la plage cible, le dispositif de commande (30) permute de façon sélective l'utilisation du dispositif de pesage par combinaison (1) entre un premier mode et un deuxième mode,
dans le premier mode, le dispositif de pesage par combinaison fonctionne de sorte que les articles sont introduits en plus dans une trémie sélectionnée, tandis que les articles maintenus dans la trémie sont laissés tels quels, et
dans le deuxième mode, le dispositif de pesage par combinaison fonctionne de sorte que, pour une trémie sélectionnée pour laquelle une surcharge risque de survenir lorsque des articles additionnels sont introduits dans celle-ci, au lieu de l'introduction additionnelle des articles dans la trémie sélectionnée, les articles maintenus dans la trémie sélectionnée sont déchargés à l'extérieur, et les articles sont nouvellement introduits dans la trémie sélectionnée.

2. Dispositif de pesage par combinaison (1) selon la revendication 1, dans lequel
lorsque la valeur du poids dépasse une valeur prédéterminée qui est préétablie, le dispositif de commande (30) donne lieu à l'évacuation à l'extérieur des articles maintenus dans la trémie correspondant à la valeur de poids, et
dans le deuxième mode, le dispositif de commande (30) donne lieu à l'évacuation à l'extérieur des articles maintenus dans la trémie correspondant à la valeur de poids même lorsque la valeur de poids ne dépasse pas la valeur prédéterminée.

3. Dispositif de pesage par combinaison (1) selon la revendication 2,
le dispositif de commande (30) commutant l'utilisation du dispositif de pesage par combinaison (1) du premier mode au deuxième mode lorsque le dispositif de pesage par combinaison (1) fonctionne dans le premier mode et la valeur du poids dépasse la valeur prédéterminée.

4. Dispositif de pesage par combinaison (1) selon une quelconque des revendications 1 à 3,
le dispositif de commande (30) commutant l'utilisation du dispositif de pesage par combinaison (1) au premier mode lorsque le nombre de trémies est supérieur ou égal à une première valeur, et
le dispositif de commande (30) commutant l'utilisation du dispositif de pesage par combinaison (1) au deuxième mode lorsque le nombre de trémies est inférieur à la première valeur.

5. Dispositif de pesage par combinaison (1) selon la revendication 4,
le dispositif de commande (30) divisant les trémies en une pluralité de groupes,
lorsque le nombre de trémies appartenant aux groupes est supérieur ou égal à la première valeur, le dispositif de commande (30) commutant l'utilisation du dispositif de pesage par combinaison (1) relativement aux groupes au premier mode, et
lorsque le nombre de trémies appartenant aux groupes est inférieur à la première valeur, le dispositif de commande (30) commutant l'utilisation du dispositif de pesage par combinaison (1) relativement aux groupes au deuxième mode.
